**Europäisches Patentamt**

**European Patent Office**

**Office européen des brevets**

(19)

(11) Veröffentlichungsnummer: **0 314 929 B1**

(12) # EUROPÄISCHE PATENTSCHRIFT

(45) Veröffentlichungstag der Patentschrift:
11.09.91 Patentblatt 91/37

(51) Int. Cl.⁵: **F22B 1/18**

(21) Anmeldenummer: **88116450.3**

(22) Anmeldetag: **05.10.88**

(54) **Abhitzekessel zur Kühlung von Partialoxidationsrohgas.**

(30) Priorität: **04.11.87 DE 3737359**

(43) Veröffentlichungstag der Anmeldung:
**10.05.89 Patentblatt 89/19**

(45) Bekanntmachung des Hinweises auf die
Patenterteilung:
**11.09.91 Patentblatt 91/37**

(84) Benannte Vertragsstaaten:
**DE ES GB IT NL**

(56) Entgegenhaltungen:
**EP-A- 0 012 654**
**DE-A- 3 248 096**
**DE-U- 8 704 049**
**FR-A- 2 513 146**
**GB-A- 1 590 706**
**GB-A- 2 068 095**
**GB-A- 2 093 175**

(73) Patentinhaber: **Krupp Koppers GmbH**
**Altendorfer Strasse 120**
**W-4300 Essen 1 (DE)**

(72) Erfinder: **Linke, Adolf**
**Bellenbergsteig 47 b**
**W-4300 Essen 16 (DE)**
Erfinder: **Dutz, Karl-Heinz**
**In der Kuriger Heide 4**
**W-4352 Herten (DE)**
Erfinder: **Niermann, Hans**
**Wickenburgstrasse 58**
**W-4300 Essen 1 (DE)**
Erfinder: **Wilmer, Gerhard**
**Am Pastoratsweg 27**
**W-4320 Hattingen (DE)**

EP 0 314 929 B1

**Beschreibung**

Die Erfindung betrifft einen Abhitzekessel zur Kühlung von Partialoxidationsrohgas mit einem in einem Druckgefäß angeordneten Rohrkörper sowie integriertem Rohgas-Reingaswärmeaustauscher.

Aus der DE-OS 3505157 ist ein Verfahren zum Erzeugen von elektrischer Energie in einem kombinierten Gas- und Dampfturbinenkraftwerk mit vorgeschalteter Kohlevergasungsanlage bekannt. Bei diesem Verfahren wird das entstaubte und entschwefelte Reingas vor dem Eintritt in die Brennkammer der Gasturbine im indirekten Wärmeaustausch mit dem heißen Partialoxidationsrohgas bis auf eine Temperatur von 300 bis 500°C vorgewärmt. Dieser Wärmeaustausch soll dabei in einem Rohgas-Reingaswärmeaustauscher erfolgen, dessen Wärmeaustauschflächen in den Abhitzekessel der Kohlevergasungsanlage integriert sind.

Durch diese Arbeitsweise soll einerseits ein möglichst großer Anteil der fühlbaren Wärme des aus der Kohlevergasungsanlage austretenden heißen Partialoxidationsrohgases an das kalte entstaubte und entschwefelte Reingas übertragen werden, das der Brennkammer der Gasturbine zugeführt wird. Andererseits soll es durch die Anordnung des Rohgas-Reingaswärmeaustauschers innerhalb des Abhitzekessels besser als bei herkömmlichen Wärmeaustauschen möglich sein, die auf der Rohgasseite der Wärmeaustauscherfläche auftretenden Verkrustungen und Verschmutzungen zu beseitigen.

Der genannten Entgegenhaltung sind jedoch keine Einzelheiten bezüglich der konstruktiven Ausgestaltung eines derartigen Abhitzekessels mit integriertem Rohgas-Reingaswärmeaustauscher zu entnehmen.

Aus der DE-U-8704049 ist ferner eine Vorrichtung bekannt, die insbesondere zur Kühlung der bei der Verbrennung von $NH_3$ anfallenden Prozeßgase verwendet werden soll. Hierbei ist innerhalb eines mit Wandkühlflächen versehenen Behältermantels ein Prozeßgas-Hilfsgaswärmeaustauscher mit senkrecht stehenden Rohren zentral angeordnet. Dieser Prozeßgas-Hilfsgaswärmeaustauscher ist dabei an beiden Seiten von sogenannten Spiralheizflächen umgeben, deren Windungen an einen Wasser-Dampfkreislauf angeschlossen sind. Das Problem der Abreinigung der Wärmeaustauscherflächen wird bei dieser Vorrichtung überhaupt nicht angesprochen, weil es bei den Prozeßgasen, die damit gekühlt werden sollen, offensichtlich überhaupt nicht auftritt.

Die vorliegende Erfindung befaßt sich demgegenüber insbesondere mit der konstruktiven Lösung dieses Problems und verfolgt das Ziel, eine möglichst zweckmäßige Ausgestaltung eines Abhitzekessels zu schaffen, der insbesondere zur Durchführung des in DE-OS 3505157 beschriebenen Verfahrens geeignet ist.

Der der Lösung dieser Aufgabe dienende Abhitzekessel der eingangs genannten Art ist erfindungsgemäß dadurch gekennzeichnet,

daß der Rohrkörper als Rohrkorb ausgebildet ist, wobei zwischen dem Druckgefäß und dem Rohrkorb ein oder mehrere wandintegrierte Rußbläser angeordnet sind,

daß innerhalb des Rohrkorbes der Rohgas-Reingaswärmeaustauscher sowie über und unter dem Rohgas-Reingaswärmeaustauscher Heizflächen angeordnet sind und

daß der Rohgas-Reingaswärmeaustauscher aus zwei oder mehreren rohrförmig gewickelten, vom Reingas durchflossenen Rohrschlangen besteht, die strömungsmäßig so miteinander verbunden sind, daß das Reingas über eine gemeinsame Leitung zugeführt und über eine gemeinsame Leitung wieder abgezogen wird.

Wesentlich für Gas einwandfreie Funktionieren des erfindungsgemäßen Abhitzekessels ist es, daß er mit Reinigungsgeräten ausgerüstet ist, durch die Verschmutzungen auf den Wärmeaustauscher- bzw. Rohrflächen auch während des laufenden Betriebes entfernt werden können. Hierfür sind zwischen dem Druckgefäß und dem Rohrkorb ein oder mehrere wandintegrierte Rußbläser angeordnet. Ferner ist es zweckmäßig, innerhalb des Druckgefäßes mechanische, auf den Rohrkorb, den Rohgas-Reingaswärmeaustauscher und die Heizflächen einwirkende Reinigungsgeräte, wie z.B. Klopfeinrichtungen, vorzusehen.

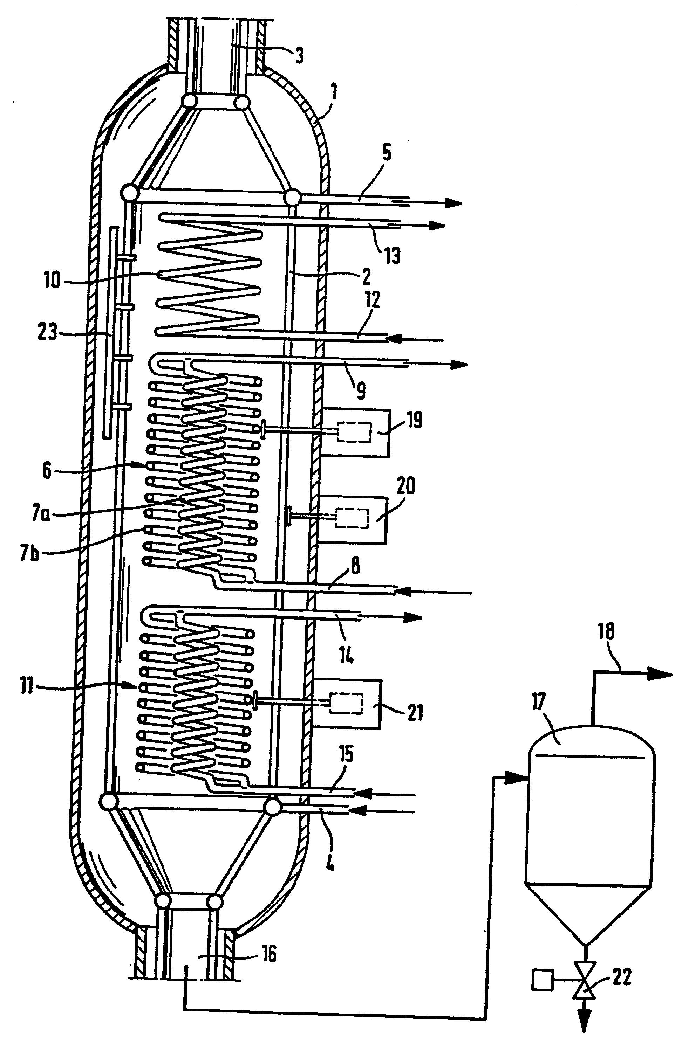

Die Abbildung zeigt als Ausführungsbeispiel einen Schnitt durch eine Ausführungsform des erfindungsgemäßen Abhitzekessels in vereinfachter Darstellung. Die Abbildung läßt dabei die Anordnung aller wesentlichen Teile des Abhitzekessels erkennen, ohne auf deren konstruktive Ausgestaltung im Datail einzugehen. Es ist jedoch davon auszugehen, daß es sich hierbei um bekannte, der Fachwelt geläufige Komponenten handelt.

Der in der Abbildung dargestellte Abhitzekessel besteht aus dem Druckgefäß 1, in dem der als Rohrkorb 2 ausgebildete Rohrkörper angeordnet ist, der der Abhitzedampferzeugung dient. Das Druckgefäß 1 ist dabei so ausgelegt, daß es dem herrschenden Vergasungsdruck standhält. Das von dem in der Abbildung nicht dargestellten Kohlevergaser kommende Partialoxidationsrohgas tritt mit entsprechendem Druck von oben über den Stutzen 3 in das Druckgefäß 1 ein. Der Vergaser kann hierbei bereits mit einem integrierten Abhitzekessel-Strahlungsteil versehen sein. Die Speisewasserzufuhr zum Rohrkorb 2 erfolgt über die Leitung 4 und der bei der Kühlung des Partialoxidationsgases anfallende Wasserdampf wird über die Leitung 5 aus dem Rohrkorb 2 Abgezogen. Innerhalb des Rohrkorbes 2 ist der Rohgas-Reingaswärmeaustauscher 6 angeordnet. Im vorliegenden Ausführungsbeispiel besteht dieser aus zwei rohrförmig gewickelten Rohrschlangen 7a und 7b, die vom Reingas durchflossen werden und die strömungsmäßig so miteinander verbunden sind, daß das entstaubte und entschwefelte kalte Reingas über die Leitung 8 in die Rohrschlangen eintritt, diese durchströmt und anschließend im erhitzten Zustand über die Leitung 9 wieder abgezogen wird. Bei der dargestellten Ausführungsform werden die konzentrisch zueinander angeordneten Rohrschlangen 7a und 7b beidseitig von dem von oben nach unten fließenden heißen Partialoxidationsrohgas umströmt, so daß ein besonders intensiver Wärmeaustausch zwischen dem Rohgas und dem Reingas stattfinden kann, der je nach Rohgastemperatur zu einer Erhöhung der Reingastemperatur um 300 bis 500°C führt. Oberhalb und unterhalb des Rohgas-Reingaswärmeaustauschers 6 sind die Heizflächen 10 und 11 angeordnet, mittels derer die noch vorhandene fühlbare Wärme des Partialoxidationsrohgases zusätzlich genutzt werden kann, beispielsweise zur Sattdampferzeugung. Die erforderliche Speise- oder Kesselwasserzufuhr erfolgt hierbei über die Leitungen 12 und 15 und der Sattdampfabzug über die Leitungen 13 und 14.

Hierbei richtet sich die Anordnung und Anzahl der vorgesehenen Heizflächen sowie deren Ausgestaltung nach den geforderten Betriebsbedingungen des Abhitzekessels.

Das abgekühlte Partialoxidationsrohgas tritt über den Stutzen 16 unten aus dem Abhitzekessel aus und gelangt zwecks Staubabscheidung in den Zyklon 17, aus dem das gekühlte und entstaubte Gas über die Leitung 18 abgezogen und seiner weiteren Behandlung zugeführt wird.

Im oberen Teil des Abhitzekessels ist zwischen dem Druckgefäß 1 und dem Rohrkorb 2 der wandintegrierte Rußbläser 23 angeordnet. Hierbei kann es sich beispielsweise um eine Konstruktion handeln, die in der DE-OS 3312599 beschrieben worden ist. Ferner sind im Bereich des Rohgas-Reingaswärmeaustauschers 6 sowie der unteren Heizflächen 11 mechanische Reinigungsgeräte 19, 20 und 21 angeordnet, die in diesem Falle als Klopfeinrichtungen ausgebildet sind. Hierbei wirkt das Reinigungsgerät 19 auf den Rohgas-Reingaswärmetaüscher 6, der Reinigungsgerät 20 auf den Rohrkorb 2 und das Reinigungsgerät 21 auf die unteren Heizflächen 11 ein. Selbstverständlich wird man die Anordnung und die Anzahl der wandintegrierten Rußbläser 23 sowie der mechanischen Reinigungsgeräte 19-21 den jeweiligen Erfordernissen in der Praxis anpassen, so daß deren Anordnung auch von der in der Abbildung dargestellten Anordnung abweichen kann. Entscheidend ist in diesem Zusammenhang allerdings, daß alle innerhalb des Abhitzekessels anfallenden Abreinigungsprodukte gemeinsam durch eine einzige Einrichtung aus dem System entfernt werden. Im vorliegenden Falle ist dies der Zyklon 17, in dem diese Abreinigungsprodukte zusammen mit den im Gas enthaltenen Feststoffen abgeschieden und über die Schleuseinrichtung 22 ausgetragen werden.

## Patentansprüche

1. Abhitzekessel zur Kühlung von Partialoxidationsrohgas mit einem in einem Druckgefäß angeordneten Rohrkörper sowie integriertem Rohgas-Reingaswärmeaustauscher, dadurch gekennzeichnet,
daß der Rohrkörper als Rohrkorb (2) ausgebildet ist, wobei zwischen dem Druckgefäß (1) und dem Rohrkorb (2) ein oder mehrere wandintegrierte Rußbläser (23) angeordnet sind,
daß innerhalb des Rohrkorbes (2) der Rohgas-Reingaswärmeaustauscher (6) sowie über und unter dem Rohgas-Reingaswärmeaustauscher (6) Heizflächen (10 ; 11) angeordnet sind und
daß der Rohgas-Reingaswärmeaustauscher (6) aus zwei oder mehreren rohrförmig gewickelten, vom Reingas durchflossenen Rohrschlangen (7a und 7b) besteht, die strömungsmäßig so miteinander verbunden sind, daß das Reingas über eine gemeinsame Leitung (8) zugeführt und über eine gemeinsame Leitung (9) wieder abgezogen wird.

2. Abhitzekessel nach Anspruch 1, dadurch gekennzeichnet, daß die Rohrschlangen (7a und 7b) des Rohgas-Reingaswärmeaustauschers (6) konzentrisch zueinander angeordnet sind.

3. Abhitzekessel nach den Ansprüchen 1 und 2, dadurch gekennzeichnet, daß innerhalb des Druckgefäßes (1) mechanische Reinigungsgeräte (19 ; 20; 21) angeordnet sind, die auf den Rohrkorb (2), den Rohgas-Reingaswärmeaustauscher (6) und die Heizflächen (10 ; 11) einwirken können.

## Claims

1. Waste heat boiler for cooling partial oxidation crude gas with a tube body positioned in a pressure vessel and with an integral crude gas/clean gas heat exchanger, characterized in that,
the tube body is formed as a tube cage (2), one or more sootblowers (23) integral with the wall being positioned between the pressure vessel (1) and the tube cage (2),
in that, inside the tube cage (2), the crude gas-/clean gas heat exchanger (6) and heating surfaces (10 ; 11) above and below the crude gas/clean gas heat exchanger (6) are positioned, and
in that the crude gas/clean gas heat exchanger (6) consists of two or more tube coils (7a and 7b) which are wound in a tubular manner and carry the flow of clean gas and which are flow-connected to one another in such a way that the clean gas is fed via a common line (8) and taken off again via a common line (9).

2. Waste heat boiler according to Claim 1, characterised in that the tube coils (7a and 7b) of the crude gas/clean gas heat exchanger (6) are arranged to be concentric with one another.

3. Waste heat boiler according to Claims 1 and 2, characterised in that mechanical cleaning equipment (19 ; 20 ; 21) which can act on the tube cage (2), the crude gas/clean gas heat exchanger (6) and the heating surfaces (10 ; 11) is provided within the pressure vessel (1).

## Revendications

1. Chaudière de récupération, pour le refroidissement de gaz brut partiellement oxydé, avec un corps tubulaire disposé dans une enceinte sous pression ainsi qu'un échangeur de chaleur intégré gaz brut/gaz purifié, caractérisée en ce que

— le corps tubulaire est constitué par un panier tubulaire (2), un ou plusieurs appareils de soufflage de suie (23) intégrés dans la paroi étant disposés entre l'enceinte sous pression (1) et le panier tubulaire (2),

— l'échangeur de chaleur gaz brut/gaz purifié (6) ainsi que des surfaces chauffantes (10 ; 11) au-dessus et en dessous de l'échangeur de chaleur gaz brut/gaz purifié (6) sont disposés à l'intérieur du panier tubulaire (2),

— l'échangeur de chaleur gaz brut/gaz purifié (6) se compose de deux ou de plusieurs serpentins (7a et 7b) enroulés en forme de tubes, parcourus par le gaz purifié, qui sont raccordés l'un à l'autre, pour les besoins de l'écoulement, de telle façon que le gaz purifié est fourni par une conduite commune (8) et est de nouveau aspiré par une conduite commune (9).

2. Chaudière de récupération suivant la revendication 1, caractérisée en ce que les serpentins (7a et 7b) de l'échangeur de chaleur gaz brut/gaz purifié (6) sont disposés concentriquement l'un à l'autre.

3. Chaudière de récupération suivant les revendications 1 et 2, caractérisée en ce qu'à l'intérieur de l'enceinte sous pression (1) sont disposés des appareils de nettoyage mécaniques (19 ; 20 ; 21) qui peuvent agir sur le panier tubulaire (2), sur l'échangeur de chaleur gaz brut/gaz purifié (6) et sur les surfaces chauffantes (10 ; 11).